# EUROPEAN PATENT APPLICATION

(11) **EP 4 661 491 A1**
(43) Date of publication of application: **10.12.2025**
(21) Application number: 23919118.2
(22) Date of filing: 03.02.2023
(51) Int. Cl.: H04W 36/00

(54) **CONTROL METHOD AND APPARATUS FOR TRANSPORT ENTITY**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2023/074473
(87) International publication number: WO 2024/159543

(57) **Abstract**

Disclosed in embodiments of the present disclosure are a control method and apparatus for a transport entity, which can be applied to systems such as Internet of Vehicles, V2X, and V2V. The method comprises: in response to a terminal device triggering a mobility process, the terminal device determines use information of the mobility process; and according to the use information of the mobility process, the terminal device processes a transport entity corresponding to the mobility process. By implementing the embodiments of the present disclosure, when triggering a mobility process, a terminal device can use different processing modes to process different transport entities according to a use of the mobility process, thereby reducing data loss and the interruption time of a dynamic cell (or cell group) change.

## Description

### FIELD

The present invention relates to the field of communication technologies, and in particular to a control method and a control device for a transmission entity.

### BACKGROUND

In the related technologies, during a mobility procedure of a terminal device, the terminal device may control a processing for a transmission entity based on an RRC (Radio Resource Control) configuration from a network device. The transmission entity may be an L2 (layer 2) entity, such as a PDCP (Packet Data Convergence Protocol), an RLC (Radio Link Control) entity and a MAC (Medium Access Control) entity. For example, for the PDCP entity and the RLC entity, in a case of applying a cell (or cell group) RRC (Radio Resource Control) configuration, the terminal device processes the PDCP entity and the RLC entity according to an entity processing manner (such as reestablishment or recovery) in a static RRC configuration from the network device.

For the MAC entity, the terminal device determines to reset the MAC entity based on a current RRC processing trigger event. The trigger event includes an RRC connection establishment, an RRC connection recovery, an RRC connection reestablishment, an RRC connection failure, an RRC connection release, a cell handover, etc. However, since the RRC configuration of the network device is static, data loss may occur.

### SUMMARY

The embodiments of the present invention provide a control method and a control device for a transmission entity, which may be applied to vehicle networking, such as vehicle to everything (V2X) communication, long term evolution-vehicle (LTE-V) communication, vehicle to vehicle (V2V) communication, etc., or may be applied to the fields of intelligent driving, intelligent connected vehicles, etc.; the terminal device performs different processing for transmission entities in different manners based on purposes of mobility procedures, thereby reducing data loss and interruption time of dynamic cell (or cell group) change.

In a first aspect, embodiments of the present invention provide a control method for a transmission entity, performed by a terminal device, including:
in response to the terminal device triggering a mobility procedure, determining purpose information of the mobility procedure; and
processing the transmission entity corresponding to the mobility procedure based on the purpose information of the mobility procedure.

In this technical solution, different processing for transmission entities is performed in different processing manners by the terminal device based on purposes of mobility procedures. That is, during a mobility procedure of the terminal device, a processing for a transmission entity may be controlled via both the RRC configuration and the control signaling, so that the network side can perform different processing for transmission entities according to different dynamic cell (or cell group) change procedures, thereby reducing data loss and the interruption time of the dynamic cell (or cell group) change.

In an implementation, the method may further include: receiving candidate cell configuration information transmitted by a network device, where the candidate cell configuration information includes purpose information of a candidate cell configuration; and determining the purpose information of the mobility procedure based on the purpose information of the candidate cell configuration.

In this technical solution, the purpose information of the candidate cell configuration is added to the candidate cell configuration information of the network device; in this way, the terminal device can determine the purpose information of the mobility procedure based on the purpose information of the candidate cell configuration; as a result, the terminal device can perform corresponding processing on the transmission entity corresponding to the mobility procedure based on the purpose information of the mobility procedure, thereby reducing data loss and interruption time of dynamic cell (or cell group) change.

In an implementation, the purpose information includes at least one of the following information:
first purpose information, where the first purpose information indicates that the terminal device is capable of changing among multiple candidate cells based on an indication from a network device;
second purpose information, where the second purpose information indicates the terminal device to change a serving cell configuration to a candidate cell configuration in case that a trigger condition configured by a network device or agreed upon in a protocol is met; or,
third purpose information, where the third purpose information indicates the terminal device to change the serving cell configuration to the candidate cell configuration.

In an implementation, the processing the transmission entity corresponding to the mobility procedure based on the purpose information of the mobility procedure includes at least one of:
receiving an L1 or L2 control signaling transmitted by the network device, and processing an L2 entity based on the L1 or L2 control signaling;
receiving a radio resource control (RRC) control signaling transmitted by the network device, and processing the L2 entity based on the RRC control signaling; or,
processing a specific L2 entity based on a processing manner for the transmission entity corresponding to the mobility procedure that is stipulated by a protocol.

In this technical solution, during a mobility procedure of the terminal device, a processing for a transmission entity may be controlled via both the RRC configuration and the control signaling, so that the network side can perform different processing for transmission entities according to different dynamic cell (or cell group) change procedures, thereby reducing data loss and the interruption time of the dynamic cell (or cell group) change.

In an implementation, the processing the L2 entity based on the L1 or L2 control signaling includes: processing the L2 entity based on indication information in the L1 or L2 control signaling.

In an implementation, the processing the L2 entity based on the RRC control signaling includes: processing the L2 entity based on indication information in the RRC control signaling.

In an implementation, the indication information includes at least one of the following:
a configuration identifier, where the configuration identifier is used to indicate a configuration corresponding to a cell group or a cell;
L2 entity information, where the L2 entity information includes an L2 entity type, and the L2 entity type includes at least one of: service data adaptation protocol (SDAP), packet data convergence protocol (PDCP), radio link control (RLC), or medium access control (MAC); or,
a processing manner, where the processing manner includes any one of: reestablishment, reset or partial reset, or remaining unchanged.

In an implementation, the method may further include:
determining a processing manner for processing the transmission entity corresponding to the mobility procedure; where the determining the processing manner for processing the transmission entity corresponding to the mobility procedure includes at least one of:
in case that the protocol stipulates the processing manner for the transmission entity corresponding to the mobility procedure, and the L1 or L2 control signaling transmitted by the network device is received by the terminal device, determining that the processing is to be performed by adopting a processing manner of processing the L2 entity based on the L1 or L2 control signaling;
in case that the protocol stipulates the processing manner for the transmission entity corresponding to the mobility procedure, and the RRC control signaling transmitted by the network device is received by the terminal device, determining that the processing is to be performed by adopting a processing manner of processing the L2 entity based on the RRC control signaling;
in case that the L1 or L2 control signaling transmitted by the network device and the RRC control signaling transmitted by the network device are received by the terminal device, determining that the processing is to be performed by adopting a processing manner of processing the L2 entity based on the L1 or L2 control signaling; or,
in case that the L1 or L2 control signaling transmitted by the network device and the RRC control signaling transmitted by the network device are received by the terminal device, determining a most recently received control signaling from the L1 or L2 control signaling and the RRC control signaling based on information about a time at which the L1 or L2 control signaling is received and information about a time at which the RRC control signaling is received, and processing based on a processing manner of processing the L2 entity based on the most recently received control signaling.

In a second aspect, embodiments of the present invention provide another control method for a transmission entity, performed by a network device, including:
transmitting candidate cell configuration information to a terminal device, where the candidate cell configuration information includes purpose information of a candidate cell configuration, and the purpose information indicates the terminal device to process the transmission entity corresponding to a mobility procedure in case that the mobility procedure is triggered.

In this technical solution, the purpose information of the candidate cell configuration is added to the candidate cell configuration information of the network device; in this way, the terminal device can determine the purpose information of the mobility procedure based on the purpose information of the candidate cell configuration; as a result, the terminal device can perform corresponding processing on the transmission entity corresponding to the mobility procedure based on the purpose information of the mobility procedure, thereby reducing data loss and interruption time of dynamic cell (or cell group) change.

In an implementation, the purpose information includes at least one of the following:
first purpose information, where the first purpose information indicates that the terminal device is capable of changing among multiple candidate cells based on an indication from the network device;
second purpose information, where the second purpose information indicates the terminal device to change a serving cell configuration to the candidate cell configuration in case that a trigger condition configured by the network device or agreed upon in a protocol is met; or,
third purpose information, where the third purpose information indicates the terminal device to change the serving cell configuration to the candidate cell configuration.

In an implementation, the method may further include:
transmitting a control signaling to the terminal device, where the control signaling indicates the terminal device to process the transmission entity corresponding to the mobility procedure, and the control signaling includes at least one of: an L1 or L2 control signaling, a radio resource control RRC control signaling.

In an implementation, the control signaling includes indication information, where the indication information includes at least one of:
a configuration identifier, where the configuration identifier is used to indicate a configuration corresponding to a cell group or a cell;
L2 entity information, where the L2 entity information includes an L2 entity type, and the L2 entity type includes at least one of: service data adaptation protocol (SDAP), packet data convergence protocol (PDCP), radio link control (RLC), or medium access control (MAC); or,
a processing manner, where the processing manner includes any one of: reestablishment, reset or partial reset, or remaining unchanged.

In a third aspect, embodiments of the present invention provide a communication device, which has some or all of functions of a terminal device implementing the method described in the first aspect. For example, functions of the communication device may include functions of some or all of the embodiments in the present invention, or may include functions of implementing any one of the embodiments in the present invention alone. The functions may be implemented by hardware, or by hardware executing corresponding software. The hardware or software includes one or more units or modules corresponding to the above functions.

In an implementation, a structure of the communication device may include a reception and transmission module and a processing module, and the processing module is configured to support the communication device to execute corresponding functions in the above method. The reception and transmission module is configured to support communication between the communication device and other device. The communication device may further include a storage module, and the storage module is configured to couple with the reception and transmission module and the processing module, and store a computer program and data needed for the communication device.

In an implementation, the processing module is configured to, in response to the terminal device triggering a mobility procedure, determine purpose information of the mobility procedure. The processing module is further configured to process the transmission entity corresponding to the mobility procedure based on the purpose information of the mobility procedure.

In an implementation, the reception and transmission module is configured to receive candidate cell configuration information transmitted by a network device, where the candidate cell configuration information includes purpose information of a candidate cell configuration; and the processing module is further configured to determine the purpose information of the mobility procedure based on the purpose information of the candidate cell configuration.

In an implementation, the purpose information includes at least one of the following: first purpose information, where the first purpose information indicates that the terminal device is capable of changing among multiple candidate cells based on an indication from a network device; second purpose information, where the second purpose information indicates the terminal device to change a serving cell configuration to a candidate cell configuration in case that a trigger condition configured by a network device or agreed upon in a protocol is met; or third purpose information, where the third purpose information indicates the terminal device to change the serving cell configuration to the candidate cell configuration.

In an implementation, the reception and transmission module is further configured to receive an L1 or L2 control signaling transmitted by the network device; the processing module is specifically configured to process an L2 entity based on the received L1 or L2 control signaling.

In an implementation, the reception and transmission module is further configured to receive a radio resource control (RRC) control signaling transmitted by the network device; the processing module is specifically configured to process an L2 entity based on the received RRC control signaling.

In an implementation, the processing module is specifically configured to: process a specific L2 entity based on a processing manner for the transmission entity corresponding to the mobility procedure that is stipulated by a protocol.

In an implementation, the processing module is specifically configured to: process the L2 entity based on indication information in the L1 or L2 control signaling.

In an implementation, the processing module is specifically configured to: process the L2 entity based on indication information in the RRC control signaling.

In an implementation, the indication information includes at least one of the following: a configuration identifier, where the configuration identifier is used to indicate a configuration corresponding to a cell group or a cell; L2 entity information, where the L2 entity information includes an L2 entity type, and the L2 entity type includes at least one of: service data adaptation protocol (SDAP), packet data convergence protocol (PDCP), radio link control (RLC), or medium access control (MAC); or a processing manner, where the processing manner includes any one of: reestablishment, reset or partial reset, or remaining unchanged.

In an implementation, the processing module is further configured to: determine a processing manner for processing the transmission entity corresponding to the mobility procedure; where determining the processing manner for processing the transmission entity corresponding to the mobility procedure includes at least one of:
in case that the protocol stipulates the processing manner for the transmission entity corresponding to the mobility procedure, and the L1 or L2 control signaling transmitted by the network device is received by the terminal device, determining that the processing is to be performed by adopting a processing manner of processing the L2 entity based on the L1 or L2 control signaling;
in case that the protocol stipulates the processing manner for the transmission entity corresponding to the mobility procedure, and the RRC control signaling transmitted by the network device is received by the terminal device, determining that the processing is to be performed by adopting a processing manner of processing the L2 entity based on the RRC control signaling;
in case that the L1 or L2 control signaling transmitted by the network device and the RRC control signaling transmitted by the network device are received by the terminal device, determining that the processing is to be performed by adopting a processing manner of processing the L2 entity based on the L1 or L2 control signaling; or
in case that the L1 or L2 control signaling transmitted by the network device and the RRC control signaling transmitted by the network device are received by the terminal device, determining a most recently received control signaling from the L1 or L2 control signaling and the RRC control signaling based on information about a time at which the L1 or L2 control signaling is received and information about a time at which the RRC control signaling is received, and processing based on a processing manner of processing the L2 entity based on the most recently received control signaling.

As an example, the processing module may be a processor, the reception and transmission module may be a transceiver or a communication interface, and the storage module may be a memory.

In a fourth aspect, embodiments of the present invention provide another communication device, which has some or all of functions of a network device implementing the method described in the second aspect. For example, functions of the communication device may include functions of some or all of the embodiments in the present invention, or may include functions of implementing any one of the embodiments in the present invention alone. The functions may be implemented by hardware, or by hardware executing corresponding software. The hardware or software includes one or more units or modules corresponding to the above functions.

In an implementation, a structure of the communication device may include a reception and transmission module and a processing module, and the processing module is configured to support the communication device to execute corresponding functions in the above method. The reception and transmission module is configured to support communication between the communication device and other device. The communication device may further include a storage module, and the storage module is configured to couple with the reception and transmission module and the processing module, and store a computer program and data needed for the communication device.

In an implementation, the reception and transmission module is configured to transmit candidate cell configuration information to a terminal device, where the candidate cell configuration information includes purpose information of a candidate cell configuration, and the purpose information indicates the terminal device to process the transmission entity corresponding to a mobility procedure in case that the mobility procedure is triggered.

In an implementation, the purpose information includes at least one of the following: first purpose information, where the first purpose information indicates that the terminal device is capable of changing among multiple candidate cells based on an indication from the network device; second purpose information, where the second purpose information indicates the terminal device to change a serving cell configuration to the candidate cell configuration in case that a trigger condition configured by the network device or agreed upon in a protocol is met; or third purpose information, where the third purpose information indicates the terminal device to change the serving cell configuration to the candidate cell configuration.

In an implementation, the reception and transmission module is also configured to transmit a control signaling to the terminal device, where the control signaling indicates the terminal device to process the transmission entity corresponding to the mobility procedure, and the control signaling includes at least one of: an L1 or L2 control signaling; or a radio resource control (RRC) control signaling.

In an implementation, the control signaling includes indication information, where the content of the indication information includes at least one of the following: a configuration identifier, where the configuration identifier is used to indicate a configuration corresponding to a cell group or a cell; L2 entity information, where the L2 entity information includes an L2 entity type, and the L2 entity type includes at least one of: service data adaptation protocol (SDAP), packet data convergence protocol (PDCP), radio link control (RLC), or medium access control (MAC); or a processing manner, where the processing manner includes any one of: reestablishment, reset or partial reset, or remaining unchanged.

As an example, the processing module may be a processor, the reception and transmission module may be a transceiver or a communication interface, and the storage module may be a memory.

In a fifth aspect, embodiments of the present invention provide a communication device, which includes a processor. When the processor calls a computer program in a memory, the method described in the first aspect is performed.

In a sixth aspect, embodiments of the present invention provide a communication device, which includes a processor. When the processor calls a computer program in a memory, the method described in the second aspect is performed.

In a seventh aspect, embodiments of the present invention provide a communication device, including a processor and a memory, where the memory is configured to store a computer program; the processor is configured to execute the computer program stored in the memory to cause the communication device to perform the method described in the first aspect.

In an eighth aspect, embodiments of the present invention provide a communication device, including a processor and a memory, where the memory is configured to store a computer program; the processor is configured to execute the computer program stored in the memory to cause the communication device to perform the method described in the second aspect.

In a ninth aspect, embodiments of the present invention provide a communication device, including a processor and an interface circuit, where the interface circuit is configured to receive code instructions and transmit them to the processor, and the processor is configured to execute the code instructions to cause the device to perform the method described in the first aspect.

In a tenth aspect, embodiments of the present invention provide a communication device, including a processor and an interface circuit, where the interface circuit is configured to receive code instructions and transmit them to the processor, and the processor is configured to execute the code instructions to cause the device to perform the method described in the second aspect.

In an eleventh aspect, embodiments of the present invention provide a control system for a transmission entity, and the system includes the communication device according to the third aspect and the communication device according to the fourth aspect, or the system includes the communication device according to the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a twelfth aspect, embodiments of the present invention provide a computer readable storage medium, configured to store instructions used by the terminal device described above, and when the instructions are executed, the terminal device is caused to perform the method described in the first aspect.

In a thirteenth aspect, embodiments of the present invention provide a readable storage medium, configured to store instructions used by the network device described above, and when the instructions are executed, the network device is caused to perform the method described in the second aspect.

In a fourteenth aspect, the present invention further provides a computer program product including a computer program, which, when executed on a computer, causes the computer to perform the method described in the first aspect.

In a fifteenth aspect, the present invention further provides a computer program product including a computer program, which, when executed on a computer, causes the computer to perform the method described in the second aspect.

In a sixteenth aspect, the present invention provides a chip system, including at least one processor and an interface, for supporting a terminal device to implement functions involved in the first aspect, such as determining or processing at least one of data or information involved in the above method. In a feasible design, the chip system further includes a memory, and the memory is configured to store a computer program and data needed by the terminal device. The chip system may be formed by chips, or may include chips and other discrete devices.

In a seventeenth aspect, the present invention provides a chip system, including at least one processor and an interface, for supporting a network device to implement functions involved in the second aspect, such as determining or processing at least one of data or information involved in the above method. In a feasible design, the chip system further includes a memory, and the memory is configured to store a computer program and data needed by the network device. The chip system may be formed by chips, or may include chips and other discrete devices.

In an eighteenth aspect, the present invention provides a computer program, which, when executed on a computer, causes the computer to perform the method described in the first aspect

In a nineteenth aspect, the present invention provides a computer program, which, when executed on a computer, causes the computer to perform the method described in the second aspect.

### BRIEF DESCRIPTION OF THE DRAWINGS

To better clarify technical solutions of embodiments of the present invention or the background, drawings used in the embodiments of the present invention or the background are described hereinafter.
FIG. 1 is a schematic diagram of an architecture of a communication system according to embodiments of the present invention;
FIG. 2 is a flow chart of a control method for a transmission entity according to embodiments of the present invention;
FIG. 3 is a flow chart of another control method for a transmission entity according to embodiments of the present invention;
FIG. 4 is a flow chart of another control method for a transmission entity according to embodiments of the present invention;
FIG. 5 is a schematic structural diagram of a communication device according to embodiments of the present invention;
FIG. 6 is a schematic structural diagram of another communication device according to embodiments of the present invention;
FIG. 7 is a schematic structural diagram of a chip according to embodiments of the present invention.

### DETAILED DESCRIPTION

Embodiments of the present invention are described in detail hereinafter, examples of which are shown in the drawings, and the same or similar reference numerals represent the same or similar elements or elements having the same or similar functions. The embodiments described hereinafter with reference to the drawings are exemplary and are intended to be used to explain the present invention, and should not be construed as limiting the present invention. In the description of the present invention, unless otherwise specified, the symbol "/" means "or", for example, A/B may represent A or B; the expression "and/or" in the present invention merely describes an association relationship of associated objects, which indicates that there may be three relationships, for example, A and/or B may represent: A exists alone, both A and B exist, and B exists alone.

The terms used in the present invention are for the purpose of describing particular embodiments only and are not intended to limit the present invention. The singular forms "a" and "the" used in the present invention and the appended claims are intended to include the plural forms as well, unless otherwise indicated in the context clearly.

It should be understood that although the terms "first", "second", "third", etc., may be used in the present invention to describe various pieces of information, such information should not be limited to these terms. These terms are used only to distinguish pieces of information that are of the same type. For example, without departing from the scope of the present invention, first information may also be referred to as second information, and similarly, second information may also be referred to as first information. Depending on the context, for example, the expressions "if" and "on condition that" used herein may be interpreted as "in case that" or "when" or "in response to determining".

Embodiments of the present invention are described in detail hereinafter, examples of which are shown in the drawings, and the same or similar reference numerals represent the same or similar elements. The embodiments described hereinafter with reference to the drawings are exemplary and are intended to be used to explain the present invention, and should not be construed as limiting the present invention.

For ease of understanding, terms involved in the present invention are first introduced.

### 1. Dynamic cell (or cell group) change

In a fifth generation (5th generation, 5G) mobile communication system, a network side may provide multiple "candidate cells (or cell groups)" for a terminal device. The network side may subsequently control the terminal device to change among multiple "candidate cells (or cell groups)" via an L1 (such as DCI (Downlink Control Information)) or L2 (such as MAC CE (Control Element)) signaling. For example, an operating cell (or cell group) is changed from a first candidate cell (or cell group) to a second candidate cell (or cell group), such as the operating cell (or cell group) being changed from "candidate cell (or cell group) -1" to "candidate cell (or cell group) -2".

One serving cell (or cell group) may correspond to one or more "candidate cells (or cell groups)".

This process may also be called LTM (L1/L2 triggered Mobility) process. L1/L2 Triggered Mobility extends the concept of L1 (layer 1) beam management within a cell (or cell group) to mobility management between cells (or cell groups), where the terminal device is indicated to perform a cell (or cell group) handover based on L1 measurement and reporting, and L1/L2 (layer 2) signaling.

### 2. DC (Dual Connectivity)

In the 5G system, due to adoption of a DC architecture, two cell (or cell group) groups are included, i.e., an MCG (Master Cell Group, master cell (or cell group) group) and an SCG (Secondary Cell Group, secondary cell (or cell group) group). The MCG corresponds to an MN (Master Node) on a network side, and the SCG corresponds to an SN (Secondary Node) on the network side.

The MCG includes one PCell (primary cell (or cell group)) and one or more SCells (secondary cell (or cell group)). The SCG includes one PSCell (primary secondary cell (or cell group)) and one or more SCells. PCell and PSCell may be collectively referred to as SpCell (special cell (or cell group)).

### 3. L2 entity (also referred to as layer 2 entity)

L2 entities used to control data transmission and reception on the terminal device side and the network device side include: MAC (Medium Access Control); RLC (Radio Link Control); PDCP (Packet Data Convergence Protocol); SDAP (Service Data Adaptation Protocol).

During a moving procedure of the terminal device, the network device side may indicate to perform a reestablishment, reset or recover processing on an L2 entity via an RRC configuration. The reestablishment or reset processing is to set a relevant variable of the L2 entity to an initial value (such as 1) and discard the stored data. The recovery processing is to retransmit the data of the L2 entity.

### 4. Mobility procedure based on conditional triggering

In the 5G system, the terminal device may execute a mobility procedure based on a "preconfigured condition" of the network device side and a "preconfigured cell (or cell group)" corresponding to the condition. In case that the terminal device meets the "preconfigured condition" (such as a specific measurement event), the terminal device changes the serving cell (or cell group) to the "preconfigured cell (or cell group)". The mobility procedure based on conditional triggering includes: CHO (Conditional Handover); CPA (Conditional PSCell Addition, conditional primary secondary cell (or cell group) addition); CPC (Conditional PSCell Change, conditional primary secondary cell (or cell group) change).

Or, the terminal device may change a specific cell (or cell group) configuration based on an indication of the network device after the "preconfigured condition" is met. For example, the PCell configuration of the terminal device is changed from a first candidate cell (or cell group) configuration to a second candidate cell (or cell group) configuration, such as from "candidate cell (or cell group) configuration-1" to "candidate cell (or cell group) configuration-2".

It should be noted that, during a mobility procedure of a terminal device, the terminal device may control a processing for a transmission entity based on an RRC (Radio Resource Control) configuration from a network device. The transmission entity may be an L2 (layer 2) entity, such as a Packet Data Convergence Protocol (PDCP) entity, a Radio Link Control (RLC) entity, and a Medium Access Control (MAC) entity. For example, for the PDCP entity and the RLC entity, in a case of applying a cell (or cell group) RRC (Radio Resource Control) configuration, the terminal device processes the PDCP entity and the RLC entity according to an entity processing manner (such as reestablishment or recovery) in a static RRC configuration from the network device.

For the MAC entity, the terminal device determines to reset the MAC entity based on a current RRC processing trigger event. The trigger event includes an RRC connection establishment, an RRC connection recovery, an RRC connection reestablishment, an RRC connection failure, an RRC connection release, a cell handover (e.g., Reconfiguration with Sync), etc. However, since the RRC configuration of the network device is static, it is unable to process the corresponding L2 entities based on different "dynamic cell (or cell group) change" procedures, which may cause more data packet loss (e.g., reestablishing or resetting the L2 entities).

In view of the above, the embodiments of the present invention propose a control method and a control device for a transmission entity, which can control the processing for the L2 entity based on both the RRC configuration and the "dynamic cell (or cell group) change" control signaling, so that the network side can perform different processing for L2 entities according to different "dynamic cell (or cell group) change" procedures, thereby reducing data loss and the interruption time of the "dynamic cell (or cell group) change".

In order to better understand the control method for the transmission entity according to the embodiments of the present invention, a communication system to which the embodiments of the present invention are applicable is described hereinafter.

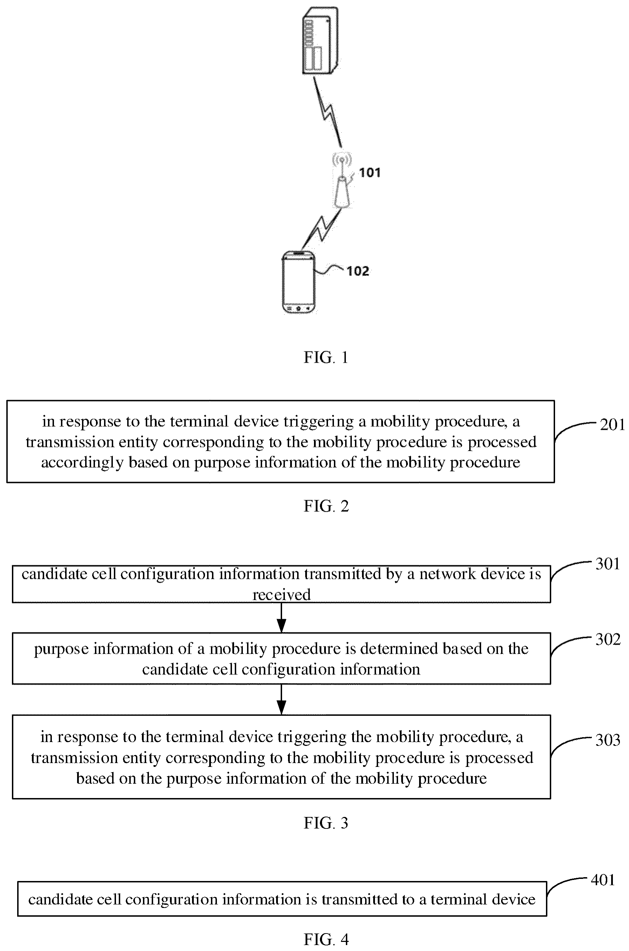

Reference is made to FIG. 1, which is a schematic diagram of an architecture of a communication system according to embodiments of the present invention. The communication system may include, but is not limited to, one network device and one terminal device. The quantity and forms of devices shown in FIG. 1 are only for examples and do not constitute a limitation on the embodiments of the present invention. In actual applications, two or more than two network devices and two or more than two terminal devices may be included. In FIG. 1, a case where the communication system includes one network device 101 and one terminal device 102 is taken as an example.

It should be noted that the technical solutions of the embodiments of the present invention can be applied to various communication systems, such as a long term evolution (Long Term Evolution, LTE) system, a 5th generation (5th Generation, 5G) mobile communication system, a 5G new radio (New Radio, NR) system, or other new mobile communication systems in the future. It should also be noted that the sidelink in the embodiments of the present invention may also be referred to as a side link or a direct link.

The network device 101 in the embodiments of the present invention is an entity on a network side for transmitting or receiving signals. For example, the network device 101 may be an evolved NodeB (eNB), a transmission reception point (TRP), a next generation NodeB (gNB) in an NR system, a base station in other mobile communication systems in the future, or an access node in a wireless fidelity (WiFi) system, etc. The specific technologies and the specific device form used by the network device are not limited in the embodiments of the present invention. The network device according to the embodiments of the present invention may include a central unit (CU) and a distributed unit (DU). The CU may also be referred to as a control unit. Protocol layers of the network device, such as a base station, may be separated by using the structure of CU-DU, where functions of some protocol layers are arranged in the CU for centralized control, and functions of some or all of the remaining protocol layers are distributed in the DU, and the CU centrally controls the DU.

The terminal device 102 in the embodiments of the present invention is an entity on a user side for receiving or transmitting signals, such as a mobile phone. The terminal device may also be referred to as a terminal, a user equipment (UE), a mobile station (MS), a mobile terminal (MT), etc. The terminal device may be a car with a communication function, a smart car, a mobile phone, a wearable device, a tablet computer (Pad), a computer with a wireless reception and transmission function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, a wireless terminal device in a smart home, etc. The specific technologies and the specific device form used by the terminal device are not limited in the embodiments of the present invention.

It can be understood that the communication system described in the embodiments of the present invention is for more clearly illustrating the technical solutions of the embodiments of the present invention, and does not constitute a limitation on the technical solutions provided by the embodiments of the present invention. A person skilled in the art can know that, with evolution of the system architecture and emergence of new service scenarios, the technical solutions provided by the embodiments of the present invention are also applicable to similar technical problems.

A control method and a control device for a transmission entity provided by the present invention are described in detail hereinafter with reference to the drawings.

Reference is made to FIG. 2, which is a flow chart of a control method for a transmission entity provided in embodiments of the present invention. It should be noted that the method may be performed by a terminal device. As shown in FIG. 2, the method may include but is not limited to the following steps.

In step 201, in response to the terminal device triggering a mobility procedure, a transmission entity corresponding to the mobility procedure is processed accordingly based on purpose information of the mobility procedure.

In embodiments of the present invention, the terminal device may trigger the mobility procedure based on a preconfigured condition of a network device side. In an implementation, in case that the terminal device determines that a condition for triggering the mobility procedure is met, the terminal device may trigger the mobility procedure. The mobility procedure may include but is not limited to at least one of the following: for example, CHO, CPA and CPC. The terminal device may determine by itself whether the condition for triggering the mobility procedure is met, or the terminal device may trigger the mobility procedure based on an indication (e.g., a signaling containing specific information) from a base station or other network device.

In the embodiments of the present invention, each type of mobility procedure may correspond to a specific mobility entity. When the terminal device triggers the mobility procedure, the terminal device may perform a corresponding processing on the L2 entity corresponding to the mobility procedure based on the purpose information of the mobility procedure. In an implementation, a case where the mobility procedure is MCG or SCG configuration change is taken as an example, when the terminal device meets a condition for triggering the MCG or SCG configuration change, the terminal device triggers the MCG or SCG configuration change, and the terminal device may perform the corresponding processing on the L2 entity corresponding to the mobility procedure based on the purpose information of the mobility procedure (such as the MCG or SCG configuration change). The L2 entity may include but is not limited to at least one of the following: a MAC entity, an RLC entity, a PDCP entity and an SDAP entity.

Optionally, in embodiments of the present invention, the terminal device may determine the purpose information of the mobility procedure, and perform the corresponding processing on the transmission entity corresponding to the mobility procedure based on the purpose information. Specifically, when the terminal device autonomously triggers the mobility procedure, the terminal device may determine the purpose information of the mobility procedure, and perform the corresponding processing on the transmission entity corresponding to the mobility procedure based on the purpose information. When the terminal device triggers the mobility procedure in response to receiving a signal from, for example, the network device, the purpose information of the mobility procedure may be determined based on the signaling transmitted by the network device, so that the transmission entity corresponding to the mobility procedure may be processed accordingly based on the purpose information.

In an implementation, the purpose information of the mobility procedure may include but is not limited to at least one of the following information: first purpose information, second purpose information and third purpose information. The first purpose information indicates that the terminal device is capable of changing among multiple candidate cells (or cell groups) (such as the "dynamic cell (or cell group) change" described above) based on an indication from a network device; the second purpose information indicates the terminal device to change a serving cell (or cell group) configuration to a candidate cell (or cell group) configuration in case that a trigger condition configured by a network device or agreed upon in a protocol is met, for example, in case that the terminal device measurement meets the A3 or A5 event, the serving MCG configuration is changed to the candidate MCG configuration; the third purpose information indicates the terminal device to change a serving cell configuration to a candidate cell configuration.

Optionally, in embodiments of the present invention, the terminal device may determine the purpose information corresponding to the specific mobility procedure based on the configuration of the network device. In an implementation, the terminal device may receive candidate cell configuration information transmitted by the network device, where the candidate cell configuration information includes purpose information of a candidate cell configuration. The terminal device may determine the purpose information corresponding to the specific mobility procedure based on the purpose information of the candidate cell configuration in the received candidate cell configuration information.

That is, the terminal device may trigger multiple types of mobility procedures, and each of the multiple types of mobility procedures has a corresponding purpose, that is, a mobility purpose corresponds to a piece of purpose information, to indicate an aim of the network device performing the mobility procedure. For example, in case that the network device intends to control the terminal device to change among multiple candidate cells (or cell groups) (such as the "dynamic cell (or cell group) change" described above), the purpose information of the candidate cell configuration configured by the network device includes the first purpose information, then the terminal device may determine that the purpose information of the mobility procedure is the first purpose information. In case that the network device requires the terminal device to change a serving cell (or cell group) configuration to a candidate cell (or cell group) configuration when a trigger condition configured by the network device or agreed upon in the protocol is met, the purpose information of the candidate cell configuration configured by the network device includes the second purpose information, then the terminal device may determine that the purpose information of the mobility procedure is the second purpose information, and the terminal device may change the serving cell (or cell group) configuration to the candidate cell (or cell group) configuration when the trigger condition configured by the network device or agreed upon in the protocol is met; in case that the network device requires the terminal device to change a serving cell configuration to a candidate cell configuration, the purpose information of the candidate cell configuration configured by the network device includes the third purpose information, then the terminal device may determine that the purpose information of the mobility procedure is the third purpose information, and may perform a convention cell handover process (such as synchronized reconfiguration corresponding to MCG configuration, and/or synchronized reconfiguration corresponding to SCG configuration).

The terminal device may determine the purpose information corresponding to the specific mobility procedure and process the corresponding transmission entity. For example, when the terminal device triggers the mobility procedure, the terminal device may determine the purpose information of the mobility procedure. If the purpose information of the mobility procedure is the first purpose information, the terminal device may change among multiple candidate cells (or cell groups) based on the L1 or L2 control signaling transmitted by the network device, and process the corresponding L2 entity.

For example, when the terminal device triggers the mobility procedure, if the purpose information of the mobility procedure is the second purpose information, the terminal device may change the serving cell (or cell group) configuration to the candidate cell (or cell group) configuration in case that the trigger condition configured by the network device or agreed upon in the protocol is met, and the corresponding L2 entity may be processed based on the RRC signaling from the network device or the processing manner agreed upon in the protocol. For example, when the terminal device measurement satisfies the A3 or A5 event, the serving MCG configuration is changed to the candidate MCG configuration.

For another example, when the terminal device triggers the mobility procedure, if the purpose information of the mobility procedure is the third purpose information, the terminal device may perform a conventional cell handover process. The conventional cell handover process means that: after the terminal device receives the third purpose information transmitted by the network device, it changes the serving cell (or cell group) configuration to the candidate cell (or cell group) configuration and processes the corresponding L2 entity. For example, the conventional cell handover process may be synchronized reconfiguration corresponding to MCG configuration and/or synchronized reconfiguration corresponding to SCG configuration.

In the present invention, different processing for transmission entities are performed in different processing manners by the terminal device based on purposes of mobility procedures. That is, during a mobility procedure of the terminal device, a processing for a transmission entity may be controlled via both the RRC configuration and the control signaling, so that the network side can perform different processing for transmission entities according to different dynamic cell (or cell group) change procedures, thereby reducing data loss and the interruption time of the dynamic cell (or cell group) change.

Reference is made to FIG. 3, which is a flow chart of another control method for a transmission entity provided in embodiments of the present invention. It should be noted that the method may be performed by a terminal device. As shown in FIG. 3, the method may include but is not limited to the following steps.

In step 301, candidate cell configuration information transmitted by a network device is received.

In the embodiments of the present invention, the candidate cell configuration information may include but is not limited to purpose information of a candidate cell configuration.

In an implementation, the terminal device may receive the candidate cell configuration information transmitted by the network device via an RRCReconfiguration (RRC reconfiguration) message. As an example, the network device may provide the candidate cell (or cell group) configuration information for the terminal device. For example, the network device may provide the candidate cell (or cell group) configuration information for the terminal device via an RRCReconfiguration (RRC reconfiguration) message. The candidate cell configuration information may at least include but is not limited to the purpose information of the candidate cell configuration. In the embodiments of the present invention, the quantity of the candidate cell configuration information may be one or may be more.

In an implementation, the purpose information of the candidate cell configuration may include but is not limited to at least one of the following: first purpose information, second purpose information and third purpose information. The first purpose information indicates that the terminal device is capable of changing among multiple candidate cells (or cell groups) (such as the "dynamic cell (or cell group) change" described above) based on an indication from the network device; the second purpose information indicates the terminal device to change a serving cell (or cell group) configuration to a candidate cell (or cell group) configuration in case that a trigger condition configured by the network device or agreed upon in a protocol is met, for example, in case that the terminal device measurement meets the A3 or A5 event, the serving MCG configuration is changed to the candidate MCG configuration; the third purpose information indicates the terminal device to change a serving cell configuration to a candidate cell configuration, for example, it may be synchronized reconfiguration corresponding to MCG configuration, and/or synchronized reconfiguration corresponding to SCG configuration.

In step 302, purpose information of a mobility procedure is determined based on the candidate cell configuration information.

In embodiments of the present invention, the terminal device may determine the purpose information of the mobility procedure based on the candidate cell configuration information, such as the purpose information of the candidate cell configuration. In an implementation, the terminal device may determine the purpose information of the candidate cell configuration as the purpose information of the mobility procedure. For example, in case that the purpose information of the candidate cell configuration is the first purpose information, the terminal device may determine that the purpose information of the mobility procedure is the first purpose information. In case that the purpose information of the candidate cell configuration is the second purpose information, the terminal device may determine that the purpose information of the mobility procedure is the second purpose information. In case that the purpose information of the candidate cell configuration is the third purpose information, the terminal device may determine that the purpose information of the mobility procedure is the third purpose information.

In the embodiments of the present invention, the purpose information of the mobility procedure is the same as or may be different from the purpose information of the candidate cell configuration. In case that the purpose information of the mobility procedure is the same as the purpose information of the candidate cell configuration, for the content included in the purpose information of the candidate cell configuration, reference may be made to the description of the content included in the purpose information of the mobility procedure, which will not be further described herein.

In step 303, in response to the terminal device triggering the mobility procedure, a transmission entity corresponding to the mobility procedure is processed based on the purpose information of the mobility procedure.

In embodiments of the present invention, in case that the terminal device triggers the mobility procedure, the terminal device processes the transmission entity corresponding to the mobility procedure based on the purpose information of the mobility procedure, and the implementation thereof may include at least one of the following: 1) receiving an L1 or L2 control signaling transmitted by the network device, and processing an L2 entity based on the received L1 or L2 control signaling; 2) receiving an RRC control signaling transmitted by the network device, and processing an L2 entity based on the received RRC control signaling; 3) processing a specific L2 entity based on a processing manner for the transmission entity corresponding to the mobility procedure that is stipulated by a protocol.

It should be noted that, as pieces of purpose information of mobility procedures are different, transmission entities processed by the terminal device may be different, and processing manners for the transmission entities may also be different.

In an implementation, in case that the purpose information of the mobility procedure is the first purpose information, the manner in which the terminal device processes the transmission entity corresponding to the mobility procedure may include at least one of the following processing manners.
Processing manner 1: processing the L2 entity based on the received L1 or L2 control signaling; optionally, the L2 entity may be processed based on first indication information in the received L1 or L2 control signaling;
Processing manner 2: processing the L2 entity based on the received RRC control signaling; optionally, the L2 entity may be processed based on second indication information in the received RRC control signaling;
Processing manner 3: processing the specific L2 entity based on the processing manner for the transmission entity corresponding to the mobility procedure agreed in the protocol.

In the embodiments, in case that the purpose information of the mobility procedure is the first purpose information, the terminal device may process the L2 entity according to processing manner 1, that is, the terminal device processes the L2 entity based on the received L1 or L2 control signaling.

In an implementation, the L1 or L2 control signaling may include an indication bit for the first indication information, and the size of the indication bit may be 1 bit. The 1 bit indicates whether the terminal device resets (or partially resets) the MAC entity corresponding to a specific configuration (such as configuration-1 corresponding to MCG or SCG). The "partial reset" behavior is to execute some behaviors in the "reset" behavior list. For example, the MAC reset behavior list includes: treating the uplink timing timer as expired; clearing downlink HARQ (Hybrid Automatic Repeat reQuest) buffer; canceling buffer reporting, etc. The MAC partial reset is to execute some behaviors in the MAC reset behavior list, such as canceling buffer reporting, and downlink HARQ buffer is retained.

In another implementation, the L1 or L2 control signaling includes an indication bit, and the size of the indication bit may be 1 bit. The information on the indication bit is the first indication information, and the 1 bit indicates whether the terminal device resets (or partially resets) the MAC entity corresponding to a specific configuration (such as configuration-1 corresponding to MCG or SCG) and reestablishes the RLC entity corresponding to the specific configuration. The "partial reset" behavior is to execute some behaviors in the "reset" behavior list. For example, the MAC reset behavior list includes: treating the uplink timing timer as expired; clearing downlink HARQ (Hybrid Automatic Repeat reQuest) buffer; canceling buffer reporting, etc. The MAC partial reset is to execute some behaviors in the MAC reset behavior list, such as canceling cache reporting, and downlink HARQ buffer is retained.

The content of the first indication information may include but is not limited to at least one of the following items 1) to 3):
1) a first configuration identifier, which indicates a configuration corresponding to a cell group or a cell; for example, an MCG (or SCG) reconfiguration corresponds to multiple MCG (or SCG) configurations, and each configuration has its corresponding configuration identifier.
2) first L2 entity information, which at least includes an L2 entity type, and the L2 entity type may include at least one of the following: SDAP, PDCP, RLC, MAC. Optionally, the first L2 entity information may further include bearer information. The bearer information may include but is not limited to at least one of the following: a bearer identifier and a bearer type. The bearer identifier may be a DRB (Data Radio Bearer) identifier, such as DRB-1. The bearer type may include any one of the following: SRB (Signaling Radio Bearer) and DRB.
3) a first processing manner, which may include any one of the following: reestablishment, reset or partially reset, and remaining unchanged. In an implementation, it may be agreed that the "reestablishment" processing manner is applicable to the PDCP entity and/or the RLC entity. In an implementation, it may be agreed that the "reset or partial reset" processing manner is applicable to the MAC entity. In an implementation, it may be agreed that the "remaining unchanged" processing manner is applicable to one or more of the following entities: SDAP entity, PDCP entity, RLC and MAC entity.

In the embodiments, in case that the purpose information of the mobility procedure is the first purpose information, the terminal device may process the L2 entity according to processing manner 2, that is, the terminal device may process the L2 entity based on the received RRC control signaling.

In an implementation, the RRC control signaling may include an indication bit for the second indication information, the size of the indication bit may be 1 bit, and the 1 bit is used to indicate whether the terminal device reestablishes the RLC entity corresponding to the specific configuration.

The content of the second indication information may include at least one of the following items 1) to 3).
1) a second configuration identifier, which is used to indicate a configuration corresponding to a cell group or a cell; for example, an MCG (or SCG) reconfiguration corresponds to multiple MCG (or SCG) configurations, and each configuration has its corresponding configuration identifier.
2) second L2 entity information, which at least includes an L2 entity type, and the L2 entity type includes at least one of the following: PDCP, RLC. Optionally, the second L2 entity information may further include bearer information. The bearer information may include but is not limited to at least one of the following: a bearer identifier and a bearer type. The bearer identifier may be a DRB identifier, such as DRB-1. The bearer type may include any one of the following: SRB and DRB.
3) a second processing manner, which includes any one of the following: reestablishment, remaining unchanged. In an implementation, it may be agreed that the "reestablishment" processing manner is applicable to the PDCP entity and/or the RLC entity. In an implementation, it may be agreed that the "remaining unchanged" processing manner is applicable to the PDCP entity and/or the RLC entity.

In the embodiments, in case that the purpose information of the mobility procedure is the first purpose information, the terminal device may process the L2 entity according to processing manner 3, that is, the terminal device may process a specific L2 entity based on a processing manner for the transmission entity corresponding to the mobility procedure that is stipulated by a protocol. In an implementation, the processing manner for the specific L2 corresponding to the mobility procedure that is stipulated by the protocol may be "reset". The information of the specific L2 entity may include at least one of the following: a configuration identifier, and an L2 entity type agreed upon by the protocol. The configuration identifier of the specific L2 entity is the same as the first configuration identifier described above, which will not be further described herein. As an example, the L2 entity type agreed upon by the protocol may be a MAC entity.

In an implementation, in case that the purpose information of the mobility procedure is the second purpose information or the third purpose information, the manner in which the terminal device processes the transmission entity corresponding to the mobility procedure may include at least one of the following processing manners.

Processing manner 2: processing the L2 entity based on the received RRC control signaling; optionally, processing manner 2 in this embodiment is the same as the "processing manner 2 adopted by the terminal device in case that the purpose information of the mobility procedure is the first purpose information" described above, and reference may be made to the description of processing manner 2 in the above, which will not be further described herein.

Processing manner 3: processing the specific L2 entity according to the processing manner for the transmission entity corresponding to the mobility procedure agreed in the protocol. Optionally, processing manner 3 in this embodiment is the same as the "processing manner 3 adopted by the terminal device in case that the purpose information of the mobility procedure is the first purpose information" described above, and reference may be made to the description of processing manner 3 in the above, which will not be further described herein.

Optionally, in embodiments of the present invention, in case that the above processing manners (such as processing manner 1, processing manner 2 and processing manner 3) received by the terminal device conflict, the terminal device may process based on any one of the following processing rules.

Processing rule 1: in case that the processing manner agreed upon in the protocol conflicts with the processing manner configured by the network device, the terminal device may performing processing according to the processing manner configured by the network device.

For example, in case that a manner of resetting the MAC entity is stipulated by the protocol according to processing manner 3, and a manner of retaining the MAC without resetting it is indicated by the network device configuration according to processing manner 1, the terminal device retains the MAC without resetting it as indicated by the network device configuration according to processing manner 1. As another example, in case that a manner of resetting the MAC entity is stipulated by the protocol according to processing manner 3, and a manner of partially resetting the MAC entity is indicated by the network device configuration according to processing manner 2, the terminal device partially resets the MAC entity as indicated by the network configuration according to processing manner 2.

Processing rule 2: in case that processing manner 1 conflicts with processing manner 2, the terminal device may process according to the processing manner of processing manner 1.

For example, in case that a manner where the RLC entity corresponding to configuration-1 remains unchanged (i.e., not reestablished) is indicated via the RRC control signaling by the network device according to processing manner 2, and subsequently a manner of reestablishing the RLC entity corresponding to configuration-1 is indicated via the MAC CE by the network device according to processing manner 1, the terminal device may reestablish the RLC entity corresponding to configuration-1 as indicated by the MAC CE of the network device according to processing manner 1.

Processing rule 3: in case that processing manner 1 conflicts with processing manner 2, the terminal device may process based on the indication information in the most recently received control signaling.

For example, a manner where the RLC entity corresponding to configuration-1 remains unchanged (i.e., not reestablished) is indicated via the RRC control signaling by the network device according to processing manner 2, and a manner of reestablishing the RLC entity corresponding to configuration-1 is indicated via the MAC CE by the network device according to processing manner 1; in this case, the terminal device may determine that the most recently received indication information is "indicated by the network device via the MAC CE according to processing manner 1" based on the time sequence of receiving the indication information of the RRC and the indication information of the MAC CE, and then the terminal device may reestablish the RLC entity corresponding to configuration-1 as indicated by the MAC CE of the network device according to processing manner 1.

Optionally, in embodiments of the present invention, the terminal device may determine a processing manner for processing the transmission entity corresponding to the mobility procedure. It should be noted that in case that multiple different types of control signaling transmitted by the network device are received by the terminal device, it may be considered that the multiple different types of control signaling are in conflict; in case that a control signaling transmitted by the network device is received by the terminal device, and the protocol stipulates a processing manner for the transmission entity corresponding to the mobility procedure, it may be considered that the processing manner stipulated by the protocol conflicts with the processing manner corresponding to the control signaling transmitted by the network device. In an implementation, in case that a conflict occurs, the terminal device may determine, based on priorities, a processing manner for the transmission entity corresponding to the mobility procedure, and process the corresponding transmission entity. For example, in a case where the processing manner corresponding to the L1 or L2 control signaling transmitted by the network device has the highest priority, the processing manner corresponding to the RRC control signaling transmitted by the network device has a relatively low priority and the processing manner for the transmission entity corresponding to the mobility procedure agreed upon by the protocol has the lowest priority; when the L1 or L2 control signaling transmitted by the network device is received by the terminal device, and it is determined that the protocol stipulates a processing manner for the transmission entity corresponding to the mobility procedure, the terminal device may determine to adopt "processing manner 1" for processing based on the priorities, that is, the transmission entity corresponding to the mobility procedure may be processed based on the received L1 or L2 control signaling. When the RRC control signaling transmitted by the network device is received by the terminal device, and it is determined that the protocol stipulates a processing manner for the transmission entity corresponding to the mobility procedure, the terminal device may determine to adopt "processing manner 2" for processing based on the priorities, that is, the transmission entity corresponding to the mobility procedure may be processed based on the received RRC control signaling. When the L1 or L2 control signaling transmitted by the network device and the RRC control signaling transmitted by the network device are received by the terminal device, the terminal device may determine to adopt "processing manner 1" for processing based on the priorities, that is, the transmission entity corresponding to the mobility procedure may be processed based on the received L1 or L2 control signaling. It should be noted that the priority levels are exemplary descriptions for those skilled in the art to understand the present invention. That is, the priority levels may be implemented in other ways, which is not limited in the present invention and will not be further described.

In an implementation, in case that a conflict occurs, the terminal device may perform processing based on any one of the following processing rules.

Conflict handling rule 1: in case that the protocol stipulates a processing manner for the transmission entity corresponding to the mobility procedure, and the L1 or L2 control signaling transmitted by the network device is received by the terminal device, the processing is performed by adopting a processing manner of processing the L2 entity based on the L1 or L2 control signaling.

That is, in case that the processing manner agreed upon by the protocol conflicts with the processing manner configured by the network device via the L1 or L2 signaling, the terminal device performs processing based on the processing manner configured by the network device via the L1 or L2 signaling.

In an implementation, in case that the protocol stipulates a processing manner for the transmission entity corresponding to the mobility procedure, and the L1 or L2 control signaling transmitted by the network device is received by the terminal device, the terminal device may adopt the processing manner of processing the L2 entity based on the L1 or L2 control signaling. For example, in a case where the mobility procedure is MCG (or SCG) reconfiguration; for this mobility procedure, the protocol stipulates that the MCG (or SCG) reconfiguration corresponds to multiple MCG (or SCG) configurations, the L2 entity corresponding to the mobility procedure is the MAC entity, and the processing manner for the L2 entity is "reset"; and the L1 or L2 control signaling transmitted by the network device indicates the terminal device to reset the MAC entity; then, in this case, terminal device may adopt the processing manner of processing the L2 entity based on the indication in the L1 or L2 control signaling transmitted by the network device, that is, resetting the MAC entity. As another example, in a case where the mobility procedure is MCG (or SCG) reconfiguration; for this mobility procedure, the protocol stipulates that the MCG (or SCG) reconfiguration corresponds to multiple MCG (or SCG) configurations, the L2 entity corresponding to the mobility procedure is the MAC entity, and the processing manner for the L2 entity is "reset"; and the L1 or L2 control signaling transmitted by the network device indicates the terminal device to keep the MAC entity unchanged; then, in this case, the terminal device may adopt the processing manner of processing the L2 entity based on the indication in the L1 or L2 control signaling transmitted by the network device, that is, the MAC entity remains unchanged.

As another example, in case that the protocol stipulates that the MAC entity is to be reset according to processing manner 3, and the network device configures an indication for partial reset of the MAC according to processing manner 1, then the terminal device may partially reset the MAC based on the indication configured via the L1 or L2 by the network device according to processing manner 1.

Conflict handling rule 2: in case that the protocol stipulates a processing manner for the transmission entity corresponding to the mobility procedure, and the RRC control signaling transmitted by the network device is received by the terminal device, the processing is performed by adopting a processing manner of processing the L2 entity based on the RRC control signaling.

That is, in case that the processing manner agreed upon by the protocol conflicts with the processing manner configured by the network device via the RRC control signaling, the terminal device performs processing based on the processing manner configured by the network device via the RRC control signaling.

In an implementation, in case that the protocol stipulates a processing manner for the transmission entity corresponding to the mobility procedure, and the RRC signaling transmitted by the network device is received by the terminal device, the terminal device may adopt the processing manner of processing the L2 entity based on the RRC signaling. For example, in a case where the mobility procedure is MCG (or SCG) reconfiguration; for this mobility procedure, the protocol stipulates that the MCG (or SCG) reconfiguration corresponds to multiple MCG (or SCG) configurations, the L2 entity corresponding to the mobility procedure is the MAC entity, and the processing manner for the L2 entity is "reset"; and the RRC signaling transmitted by the network device indicates the terminal device to reset the MAC entity; then, in this case, terminal device may adopt the processing manner of processing the L2 entity based on the indication in the RRC signaling transmitted by the network device, that is, resetting the MAC entity. As another example, in a case where the mobility procedure is MCG (or SCG) reconfiguration; for this mobility procedure, the protocol stipulates that the MCG (or SCG) reconfiguration corresponds to multiple MCG (or SCG) configurations, the L2 entity corresponding to the mobility procedure is the MAC entity, and the processing manner for the L2 entity is "reset"; and the RRC signaling transmitted by the network device indicates the terminal device to keep the MAC entity unchanged; then, in this case, the terminal device may adopt the processing manner of processing the L2 entity based on the indication in the RRC signaling transmitted by the network device, that is, the MAC entity remains unchanged.

Conflict handling rule 3: in case that the L1 or L2 control signaling transmitted by the network device and the RRC control signaling transmitted by the network device are received by the terminal device, the processing is performed by adopting a processing manner of processing the L2 entity based on the L1 or L2 control signaling.

That is, in case that the processing manner configured by the network device via the L1 or L2 control signaling conflicts with the processing manner configured by the network device via the RRC control signaling, the terminal device performs processing based on the processing manner configured by the network device via the L1 or L2 signaling.

Optionally, regardless of whether the protocol stipulates a processing manner for the transmission entity corresponding to the mobility procedure, in case that a control signaling transmitted by the network device is received by the terminal device, the terminal device may process the transmission entity corresponding to the mobility procedure based on the control signaling. For example, in case that the protocol stipulates a processing manner for the transmission entity corresponding to the mobility procedure, and the L1 or L2 control signaling transmitted by the network device and the RRC control signaling transmitted by the network device are received by the terminal device, the terminal device may adopt the processing manner of processing the L2 entity based on the L1 or L2 control signaling. As another example, in case that the protocol does not stipulate a processing manner for the transmission entity corresponding to the mobility procedure, and the L1 or L2 control signaling transmitted by the network device and the RRC control signaling transmitted by the network device are received by the terminal device, the terminal device may adopt the processing manner of processing the L2 entity based on the L1 or L2 control signaling.

As an example, a manner where the RLC entity corresponding to configuration-1 remains unchanged (i.e., not reestablished) is indicated via the RRC control signaling by the network device according to processing manner 2, and subsequently a manner of reestablishing the RLC entity corresponding to configuration-1 is indicated via the MAC CE by the network device according to processing manner 1, the terminal device may reestablish the RLC entity corresponding to configuration-1 as indicated by the MAC CE according to processing manner 1.

Conflict handling rule 4: in case that the L1 or L2 control signaling transmitted by the network device and the RRC control signaling transmitted by the network device are received by the terminal device, a most recently received control signaling is determined from the L1 or L2 control signaling and the RRC control signaling based on information about a time at which the L1 or L2 control signaling is received and information about a time at which the RRC control signaling is received, and processing is performed based on a processing manner of processing the L2 entity based on the most recently received control signaling.

That is, in case that the processing manner configured by the network device via the L1 or L2 control signaling conflicts with the processing manner configured by the network device via the RRC control signaling, the terminal device may use the processing manner corresponding to the most recently received control signaling to process the transmission entity corresponding to the mobility procedure based on the times at which the different control signaling is received.

For example, a manner where the RLC entity corresponding to configuration-1 remains unchanged (i.e., not reestablished) is indicated via the RRC control signaling by the network device according to processing manner 2, and a manner of reestablishing the RLC entity corresponding to configuration-1 is indicated via the MAC CE by the network device according to processing manner 1; in this case, the terminal device may determine that the most recently received indication information is "indicated by the network device via the MAC CE according to processing manner 1" based on the time sequence of receiving the indication information, and then the terminal device may reestablish the RLC entity corresponding to configuration-1 as indicated by the MAC CE according to processing manner 1.

In the present invention, the purpose information of the candidate cell configuration is added to the candidate cell configuration information of the network device; in this way, the terminal device can determine the purpose information of the mobility procedure based on the purpose information of the candidate cell configuration; as a result, the terminal device can perform corresponding processing on the transmission entity corresponding to the mobility procedure based on the purpose information of the mobility procedure, thereby reducing data loss and interruption time of dynamic cell (or cell group) change.

It can be understood that the above embodiments describe the implementations of the control method for the transmission entity of the embodiments of the present invention from the terminal device side. The embodiments of the present invention further propose another control method for a transmission entity, and the implementations of the control method for the transmission entity will be described hereinafter from the network device side. Reference is made to FIG. 4, which is a flow chart of another control method for a transmission entity provided in embodiments of the present invention. It should be noted that the method of the embodiments of the present invention may be performed by a network device. As shown in FIG. 4, the method may include but is not limited to the following steps.

In step 401, candidate cell configuration information is transmitted to a terminal device.

In the embodiments of the present invention, the candidate cell configuration information may include purpose information of a candidate cell configuration. The purpose information indicates the terminal device to process a transmission entity corresponding to a mobility procedure in case that the mobility procedure is triggered.

In the embodiments of the present invention, the purpose information of the candidate cell configuration may include but is not limited to at least one of the following information: first purpose information, second purpose information and third purpose information. The first purpose information indicates that the terminal device is capable of changing among multiple candidate cells (or cell groups) (such as the "dynamic cell (or cell group) change" described above) based on an indication from a network device; the second purpose information indicates the terminal device to change a serving cell (or cell group) configuration to a candidate cell (or cell group) configuration in case that a trigger condition configured by a network device or agreed upon in a protocol is met, for example, in case that the terminal device measurement meets the A3 or A5 event, the serving MCG configuration is changed to the candidate MCG configuration; the third purpose information indicates the terminal device to change a serving cell configuration to a candidate cell configuration.

Optionally, in embodiments of the present invention, the network device may also transmit a control signaling to the terminal device, where the control signaling indicates the terminal device to process the transmission entity corresponding to the mobility procedure, and the control signaling includes at least one of the following: an L1 or L2 control signaling, a radio resource control RRC control signaling.

That is, the network device may also transmit the L1 or L2 control signaling to the terminal device, and/or may also transmit the RRC control signaling to the terminal device. The L1 or L2 control signaling includes first indication information, and the first indication information is used to indicate the terminal device to perform corresponding processing on a specific L2 entity based on a first processing manner. The RRC control signaling includes second indication information, and the second indication information is used to indicate the terminal device to perform corresponding processing on a specific L2 entity based on a second processing manner.

In an implementation, the network device may provide the terminal device with the candidate cell configuration information via an RRCReconfiguration (RRC reconfiguration) message, where the quantity of the candidate cell configuration information may be one or may be more. Optionally, the network device configures (such as configuring via an RRC message) the L2 entity processing manner for the cell (or cell group) in the candidate cell configuration information, which may include at least one of the following: MAC reset or partial reset; RLC reestablishment; PDCP reestablishment or recovery.

In this embodiment, the terminal device may receive the candidate cell configuration information transmitted by the network device via an RRCReconfiguration (RRC reconfiguration) message. The terminal device may determine the purpose information of the mobility procedure based on the purpose information of the candidate cell configuration. Optionally, in a case of triggering the mobility procedure, the terminal device may perform corresponding processing on the transmission entity corresponding to the mobility procedure based on the purpose information of the mobility procedure. For the implementations of the control method for the transmission entity by the terminal device, reference may be made to the above description of the terminal device side, which will not be further described herein.

In embodiments of the present invention, the purpose information of the candidate cell configuration is added to the candidate cell configuration information of the network device; in this way, the terminal device can determine the purpose information of the mobility procedure based on the purpose information of the candidate cell configuration; as a result, the terminal device can perform corresponding processing on the transmission entity corresponding to the mobility procedure based on the purpose information of the mobility procedure, thereby reducing data loss and interruption time of dynamic cell (or cell group) change.

In the above embodiments provided by the present invention, the methods provided by the embodiments of the present invention are introduced from the perspectives of the terminal device and the network device respectively. In order to implement the various functions in the methods provided by the above embodiments of the present invention, the network device and the terminal device each may include a hardware structure, a software module, to achieve the above functions in the form of hardware structure, software module, or hardware structure plus software module. Any of the above functions may be implemented in the form of hardware structure, software module, or hardware structure plus software module.

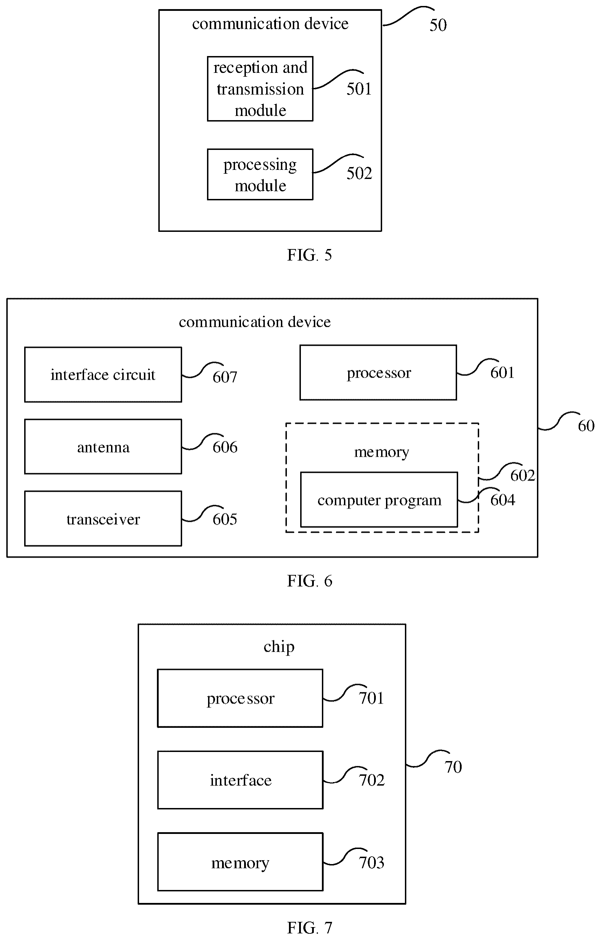

Reference is made to FIG. 5, which is a schematic structural diagram of a communication device 50 according to embodiments of the present invention. The communication device 50 shown in FIG. 5 may include a reception and transmission module 501 and a processing module 502. The reception and transmission module 501 may include a transmission module and/or a reception module. The transmission module is configured to implement a transmission function, and the reception module is used to implement a reception function. The reception and transmission module 501 may implement a transmission function and/or a reception function.

The communication device 50 may be a terminal device, or a device in a terminal device, or a device that may be used in conjunction with a terminal device. Or, the communication device 50 may be a network device, or a device in a network device, or a device that may be used in conjunction with a network device.

The communication device 50 is a terminal device: the processing module 502 is configured to, in response to the terminal device triggering a mobility procedure, determine purpose information of the mobility procedure. The processing module 502 is further configured to process the transmission entity corresponding to the mobility procedure based on the purpose information of the mobility procedure.

In an implementation, the reception and transmission module 501 is configured to receive candidate cell configuration information transmitted by a network device, where the candidate cell configuration information includes purpose information of a candidate cell configuration; and the processing module 502 is further configured to determine the purpose information of the mobility procedure based on the purpose information of the candidate cell configuration.

In a feasible implementation, the purpose information includes at least one of the following: first purpose information, where the first purpose information indicates that the terminal device is capable of changing among multiple candidate cells based on an indication from a network device; second purpose information, where the second purpose information indicates the terminal device to change a serving cell configuration to a candidate cell configuration in case that a trigger condition configured by a network device or agreed upon in a protocol is met; or third purpose information, where the third purpose information indicates the terminal device to change the serving cell configuration to the candidate cell configuration.

In a feasible implementation, the reception and transmission module 501 is further configured to receive an L1 or L2 control signaling transmitted by the network device; the processing module 502 is specifically configured to process an L2 entity based on the received L1 or L2 control signaling.

In an implementation, the reception and transmission module 501 is further configured to receive a radio resource control (RRC) control signaling transmitted by the network device; the processing module 502 is specifically configured to process an L2 entity based on the received RRC control signaling.

In an implementation, the processing module 502 is specifically configured to: process a specific L2 entity based on a processing manner for the transmission entity corresponding to the mobility procedure that is stipulated by a protocol.

In an implementation, the processing module 502 is specifically configured to: process the L2 entity based on indication information in the L1 or L2 control signaling.

In an implementation, the processing module 502 is specifically configured to: process the L2 entity based on indication information in the RRC control signaling.

In an implementation, the indication information includes at least one of the following: a configuration identifier, where the configuration identifier is used to indicate a configuration corresponding to a cell group or a cell; L2 entity information, where the L2 entity information includes an L2 entity type, and the L2 entity type includes at least one of: service data adaptation protocol (SDAP), packet data convergence protocol (PDCP), radio link control (RLC), or medium access control (MAC); or a processing manner, where the processing manner includes any one of: reestablishment, reset or partial reset, or remaining unchanged.

In an implementation, the processing module 502 is further configured to: determine a processing manner for processing the transmission entity corresponding to the mobility procedure; where determining the processing manner for processing the transmission entity corresponding to the mobility procedure by the processing module 502 includes at least one of:
in case that the protocol stipulates the processing manner for the transmission entity corresponding to the mobility procedure, and the L1 or L2 control signaling transmitted by the network device is received by the terminal device, determining that the processing is to be performed by adopting a processing manner of processing the L2 entity based on the L1 or L2 control signaling;
in case that the protocol stipulates the processing manner for the transmission entity corresponding to the mobility procedure, and the RRC control signaling transmitted by the network device is received by the terminal device, determining that the processing is to be performed by adopting a processing manner of processing the L2 entity based on the RRC control signaling;
in case that the L1 or L2 control signaling transmitted by the network device and the RRC control signaling transmitted by the network device are received by the terminal device, determining that the processing is to be performed by adopting a processing manner of processing the L2 entity based on the L1 or L2 control signaling; or,
in case that the L1 or L2 control signaling transmitted by the network device and the RRC control signaling transmitted by the network device are received by the terminal device, determining a most recently received control signaling from the L1 or L2 control signaling and the RRC control signaling based on information about a time at which the L1 or L2 control signaling is received and information about a time at which the RRC control signaling is received, and processing based on a processing manner of processing the L2 entity based on the most recently received control signaling.

The communication device 50 is a network device: the reception and transmission module 501 is configured to transmit candidate cell configuration information to a terminal device, where the candidate cell configuration information includes purpose information of a candidate cell configuration, and the purpose information indicates the terminal device to process the transmission entity corresponding to a mobility procedure in case that the mobility procedure is triggered.

In an implementation, the purpose information includes at least one of the following: first purpose information, where the first purpose information indicates that the terminal device is capable of changing among multiple candidate cells based on an indication from the network device; second purpose information, where the second purpose information indicates the terminal device to change a serving cell configuration to the candidate cell configuration in case that a trigger condition configured by the network device or agreed upon in a protocol is met; or third purpose information, where the third purpose information indicates the terminal device to change the serving cell configuration to the candidate cell configuration.

In an implementation, the reception and transmission module 501 is also configured to transmit a control signaling to the terminal device, where the control signaling indicates the terminal device to process the transmission entity corresponding to the mobility procedure, and the control signaling includes at least one of: an L1 or L2 control signaling; or a radio resource control (RRC) control signaling.

In an implementation, the control signaling includes indication information, where the content of the indication information includes at least one of the following: a configuration identifier, where the configuration identifier is used to indicate a configuration corresponding to a cell group or a cell; L2 entity information, where the L2 entity information includes an L2 entity type, and the L2 entity type includes at least one of: service data adaptation protocol (SDAP), packet data convergence protocol (PDCP), radio link control (RLC), or medium access control (MAC); or a processing manner, where the processing manner includes any one of: reestablishment, reset or partial reset, or remaining unchanged.

Regarding the device in the above embodiments, the specific manner in which each module performs operations has been described in detail in the embodiments of the method, which will not be further described herein.

Reference is made to FIG. 6, which is a schematic diagram of the structure of another communication device 60 according to embodiments of the present invention. The communication device 60 may be a network device, or a terminal device, or a chip, chip system, or processor that supports the network device to implement the above method, or a chip, chip system, or processor that supports the terminal device to implement the above method. The device may be configured to implement the method described in the above method embodiments. For details, and reference may made to the description in the above method embodiments.

The communication device 60 may include one or more processors 601. The processor 601 may be a general-purpose processor or a special-purpose processor, or the like. For example, the processor may be a baseband processor or a central processing unit. The baseband processor may be configured to process communication protocols and communication data. The central processing unit may be configured to control the communication device (such as a base station, a baseband chip, a terminal device, a terminal device chip, a DU or a CU, etc.), execute a computer program, and process data for the computer program.

Optionally, the communication device 60 may further include one or more memories 602, on which a computer program 604 may be stored, and the processor 601 may store a computer program 603. The processor 601 executes the computer program 604 and/or the computer program 903 to cause the communication device 60 to perform the method described in the above method embodiments. Optionally, the memory 602 may further store data. The communication device 60 and the memory 602 may be arranged separately or integrated together.

Optionally, the communication device 60 may further include a transceiver 605 and an antenna 606. The transceiver 605 may be referred to as a reception and transmission unit, a transceiver unit, a reception and transmission circuit, etc., and is configured to implement reception and transmission functions. The transceiver 605 may include a receiver and a transmitter. The receiver may be called a receiver unit or a reception circuit, etc., configured to implement the reception function; the transmitter may be referred to as a transmitter unit, a transmission circuit, etc., configured to implement the transmission function.

Optionally, the communication device 60 may further include one or more interface circuits 607. The interface circuit 607 is configured to receive code instructions and transmit them to the processor 601. The processor 601 executes the code instructions to cause the communication device 60 to perform the method described in the above method embodiments.

The communication device 60 is a terminal device: the processor 601 is configured to execute step 201 in FIG. 2; or execute step 302 and step 303 in FIG. 3. The transceiver 605 is configured to execute step 301 in FIG. 3.

The communication device 60 is a network device: the transceiver 605 is configured to execute step 401 in FIG. 4.

In an implementation, the processor 601 may include a transceiver for implementing reception and transmission functions. For example, the transceiver may be a reception and transmission circuit, an interface, or an interface circuit. The reception and transmission circuit, the interface or the interface circuit configured to implement the reception and transmission functions may be separated or integrated together. The above reception and transmission circuit, interface or interface circuit may be configured for reading and writing codes/data, or the above reception and transmission circuit, interface or interface circuit may be configured for signal transmission or transfer.

In an implementation, the processor 601 may store a computer program 603, and the computer program 603 is executed on the processor 601, to cause the communication device 60 to perform the method described in the above method embodiments. The computer program 603 may be embedded in the processor 601, and in this case, the processor 601 may be implemented by hardware.

In an implementation, the communication device 60 may include a circuit, and the circuit may implement functions of reception or transmission or communication in the above method embodiments. The processor and the transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal device (such as the first terminal device in the above method embodiments), but the scope of the communication device described in the present invention is not limited thereto, and the structure of the communication device may not be limited to FIG. 6. The communication device may be a stand-alone device or may be part of a larger device. For example, the communication device may be:
(1) an independent integrated circuit (IC), or chip, or chip system or subsystem;
(2) a collection of one or more ICs, where, optionally, the IC collection may include a storage component for storing data and computer programs;
(3) ASIC, such as modem;
(4) a module that can be embedded into other devices;
(5) a receiver, terminal device, intelligent terminal device, a cellular phone, a wireless equipment, a handheld device, a mobile unit, a vehicle-mounted device, a network device, a cloud device, an artificial intelligence device, etc.;
(6) others, etc.

For a case where the communication device may be a chip or a chip system, reference may be made to FIG. 7, which is a structural diagram of a chip. The chip shown in FIG. 7 includes a processor 701 and an interface 702. The quantity of processors 701 may be one or more, and the quantity of interfaces 702 may be multiple.

For a case where the chip is configured to implement the functions of the terminal device in the embodiments of the present invention:

The processor 701 is configured to, in response to the terminal device triggering a mobility procedure, determine purpose information of the mobility procedure. The processor 701 is further configured to process the transmission entity corresponding to the mobility procedure based on the purpose information of the mobility procedure.

In an implementation, the interface 702 is configured to receive candidate cell configuration information transmitted by a network device, where the candidate cell configuration information includes purpose information of a candidate cell configuration; and the processor 701 is further configured to determine the purpose information of the mobility procedure based on the purpose information of the candidate cell configuration.

In an implementation, the purpose information includes at least one of the following: first purpose information, where the first purpose information indicates that the terminal device is capable of changing among multiple candidate cells based on an indication from a network device; second purpose information, where the second purpose information indicates the terminal device to change a serving cell configuration to a candidate cell configuration in case that a trigger condition configured by a network device or agreed upon in a protocol is met; or third purpose information, where the third purpose information indicates the terminal device to change the serving cell configuration to the candidate cell configuration.

In an implementation, the interface 702 is further configured to receive an L1 or L2 control signaling transmitted by the network device. The processor 701 is specifically configured to process an L2 entity based on the received L1 or L2 control signaling.

In an implementation, the interface 702 is further configured to receive a radio resource control (RRC) control signaling transmitted by the network device; and the processor 701 is specifically configured to process an L2 entity based on the received RRC control signaling.

In an implementation, the processor 701 is specifically configured to: process a specific L2 entity based on a processing manner for the transmission entity corresponding to the mobility procedure that is stipulated by a protocol.

In an implementation, the processor 701 is specifically configured to: process the L2 entity based on indication information in the L1 or L2 control signaling.

In an implementation, the processor 701 is specifically configured to: process the L2 entity based on indication information in the RRC control signaling.

In an implementation, the indication information includes at least one of the following: a configuration identifier, where the configuration identifier is used to indicate a configuration corresponding to a cell group or a cell; L2 entity information, where the L2 entity information includes an L2 entity type, and the L2 entity type includes at least one of: service data adaptation protocol (SDAP), packet data convergence protocol (PDCP), radio link control (RLC), or medium access control (MAC); or a processing manner, where the processing manner includes any one of: reestablishment, reset or partial reset, or remaining unchanged.

In an implementation, the processor 701 is further configured to: determine a processing manner for processing the transmission entity corresponding to the mobility procedure, where determining the processing manner for processing the transmission entity corresponding to the mobility procedure by the processor 701 includes at least one of:
in case that the protocol stipulates the processing manner for the transmission entity corresponding to the mobility procedure, and the L1 or L2 control signaling transmitted by the network device is received by the terminal device, determining that the processing is to be performed by adopting a processing manner of processing the L2 entity based on the L1 or L2 control signaling;
in case that the protocol stipulates the processing manner for the transmission entity corresponding to the mobility procedure, and the RRC control signaling transmitted by the network device is received by the terminal device, determining that the processing is to be performed by adopting a processing manner of processing the L2 entity based on the RRC control signaling;
in case that the L1 or L2 control signaling transmitted by the network device and the RRC control signaling transmitted by the network device are received by the terminal device, determining that the processing is to be performed by adopting a processing manner of processing the L2 entity based on the L1 or L2 control signaling; or,
in case that the L1 or L2 control signaling transmitted by the network device and the RRC control signaling transmitted by the network device are received by the terminal device, determining a most recently received control signaling from the L1 or L2 control signaling and the RRC control signaling based on information about a time at which the L1 or L2 control signaling is received and information about a time at which the RRC control signaling is received, and processing based on a processing manner of processing the L2 entity based on the most recently received control signaling.

For a case where the chip is configured to implement the functions of the network device in the embodiments of the present invention:
the interface 702 is configured to transmit candidate cell configuration information to a terminal device, where the candidate cell configuration information includes purpose information of a candidate cell configuration, and the purpose information indicates the terminal device to process the transmission entity corresponding to a mobility procedure in case that the mobility procedure is triggered.

In an implementation, the purpose information includes at least one of the following: first purpose information, where the first purpose information indicates that the terminal device is capable of changing among multiple candidate cells based on an indication from the network device; second purpose information, where the second purpose information indicates the terminal device to change a serving cell configuration to the candidate cell configuration in case that a trigger condition configured by the network device or agreed upon in a protocol is met; or third purpose information, where the third purpose information indicates the terminal device to change the serving cell configuration to the candidate cell configuration.

In an implementation, the interface 702 is also configured to transmit a control signaling to the terminal device, where the control signaling indicates the terminal device to process the transmission entity corresponding to the mobility procedure, and the control signaling includes at least one of: an L1 or L2 control signaling; or a radio resource control (RRC) control signaling.

In an implementation, the control signaling includes indication information, where the content of the indication information includes at least one of the following: a configuration identifier, where the configuration identifier is used to indicate a configuration corresponding to a cell group or a cell; L2 entity information, where the L2 entity information includes an L2 entity type, and the L2 entity type includes at least one of: service data adaptation protocol (SDAP), packet data convergence protocol (PDCP), radio link control (RLC), or medium access control (MAC); or a processing manner, where the processing manner includes any one of: reestablishment, reset or partial reset, or remaining unchanged.

Optionally, the chip further includes a memory 703, and the memory 703 is configured to store needed computer programs and data.

Those skilled in the art can also understand that various illustrative logical blocks and steps listed in the embodiments of the present invention can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present invention.

The embodiments of the present invention also provide a control system for a transmission entity, which includes the communication device serving as a terminal device and the communication device serving as a network device in the embodiments of FIG. 5, or the system includes the communication device serving as a terminal device and the communication device serving as a network device in the embodiments of FIG. 6.

The present invention further provides a readable storage medium, on which instructions are stored. When the instructions are executed by a computer, functions of any of the above method embodiments are implemented.

The present invention further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present invention are generated in whole or in part. The computer may be a general-purpose computer, a special-purpose computer, a computer network, or other programmable device. The computer program may be stored in a computer readable storage medium or transferred from a computer readable storage medium to another computer readable storage medium. For example, the computer program may be transferred from a website, computer, server, or data center to another website, computer, server or data center through wired means (such as coaxial cable, optical fiber, digital subscriber line (DSL)) or wireless means (such as infrared, radio, microwave, etc.). The computer readable storage medium may be any available medium that can be accessed by a computer, or a data storage device integrated by one or more available media, which includes a server, a data center, and so on. The available medium may be a magnetic medium (e.g., floppy disk, hard disk, magnetic tape), optical medium (e.g., high-density digital video disc (DVD)), or semiconductor medium (e.g., solid state disk (SSD)) etc.

Those of ordinary skill in the art may appreciate that the first, second, and other numerical numbers involved in the present invention are only for convenience of description and are not used to limit the scope of the embodiments of the present invention, or to indicate the order.

At least one in the present invention may also be described as one or more, and multiple may be two, three, four or more, which are not limited by the present invention. In the embodiments of the present invention, technical features are distinguished by terms "first", "second", "third", "A", "B", "C" and "D", etc. The technical features described by the terms "first", "second", "third", "A", "B", "C" and "D" are not in an order of precedence or in an order of size.

The corresponding relationships shown in each table in the present invention can be configured or predefined. The values of the information in each table are only examples and can be configured as other values, which is not limited by the present invention. When the correspondence between information and each parameter is configured, it is not necessarily required to configure all the correspondences shown in each table. For example, in the table in the present invention, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present invention may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present invention.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present invention, but the protection scope of the present invention is not limited thereto. Any technician familiar with the technical field can easily think of changes or substitutions within the technical scope of in the present invention, all of which shall fall within the protection scope of the present invention. Therefore, the protection scope of the present invention is defined by the protection scope of the claims.

## Claims

1. A control method for a transmission entity, performed by a terminal device, comprising:
in response to the terminal device triggering a mobility procedure, determining purpose information of the mobility procedure; and
processing the transmission entity corresponding to the mobility procedure based on the purpose information of the mobility procedure.

2. The control method according to claim 1, further comprising:
receiving candidate cell configuration information transmitted by a network device, wherein the candidate cell configuration information comprises purpose information of a candidate cell configuration; and
determining the purpose information of the mobility procedure based on the purpose information of the candidate cell configuration.

3. The control method according to claim 1 or claim 2, wherein the purpose information comprises at least one of:
first purpose information, wherein the first purpose information indicates the terminal device to change among a plurality of candidate cells based on an indication from a network device;
second purpose information, wherein the second purpose information indicates the terminal device to change a serving cell configuration to a candidate cell configuration in case that a trigger condition configured by a network device or agreed upon in a protocol is met; or
third purpose information, wherein the third purpose information indicates the terminal device to change the serving cell configuration to the candidate cell configuration.

4. The control method according to claim 3, wherein processing the transmission entity corresponding to the mobility procedure based on the purpose information of the mobility procedure comprises at least one of:
receiving an L1 or L2 control signaling transmitted by the network device, and processing an L2 entity based on the L1 or L2 control signaling;
receiving a radio resource control (RRC) control signaling transmitted by the network device, and processing the L2 entity based on the RRC control signaling; or
processing a specific L2 entity based on a processing manner for the transmission entity corresponding to the mobility procedure that is stipulated by a protocol.

5. The control method according to claim 4, wherein processing the L2 entity based on the L1 or L2 control signaling comprises:
processing the L2 entity based on indication information in the L1 or L2 control signaling.

6. The control method according to claim 4, wherein processing the L2 entity based on the RRC control signaling comprises:
processing the L2 entity based on indication information in the RRC control signaling.

7. The control method according to claim 5 or claim 6, wherein the indication information comprises at least one of:
a configuration identifier, wherein the configuration identifier is used to indicate a configuration corresponding to a cell group or a cell;
L2 entity information, wherein the L2 entity information comprises an L2 entity type, and the L2 entity type comprises at least one of: service data adaptation protocol (SDAP), packet data convergence protocol (PDCP), radio link control (RLC), or medium access control (MAC); or
a processing manner, wherein the processing manner comprises any one of: reestablishment, reset or partial reset, or remaining unchanged.

8. The control method according to any one of claims 4 to 7, further comprising:
determining a processing manner for processing the transmission entity corresponding to the mobility procedure;
wherein determining the processing manner for processing the transmission entity corresponding to the mobility procedure comprises at least one of:
in case that the protocol stipulates the processing manner for the transmission entity corresponding to the mobility procedure, and the L1 or L2 control signaling transmitted by the network device is received by the terminal device, determining that the processing is to be performed by adopting a processing manner of processing the L2 entity based on the L1 or L2 control signaling;
in case that the protocol stipulates the processing manner for the transmission entity corresponding to the mobility procedure, and the RRC control signaling transmitted by the network device is received by the terminal device, determining that the processing is to be performed by adopting a processing manner of processing the L2 entity based on the RRC control signaling;
in case that the L1 or L2 control signaling transmitted by the network device and the RRC control signaling transmitted by the network device are received by the terminal device, determining that the processing is to be performed by adopting a processing manner of processing the L2 entity based on the L1 or L2 control signaling; or
in case that the L1 or L2 control signaling transmitted by the network device and the RRC control signaling transmitted by the network device are received by the terminal device, determining a most recently received control signaling from the L1 or L2 control signaling and the RRC control signaling based on information about a time at which the L1 or L2 control signaling is received and information about a time at which the RRC control signaling is received, and processing based on a processing manner of processing the L2 entity based on the most recently received control signaling.

9. A control method for a transmission entity, performed by a network device, comprising:
transmitting candidate cell configuration information to a terminal device, wherein the candidate cell configuration information comprises purpose information of a candidate cell configuration, and the purpose information indicates the terminal device to process the transmission entity corresponding to a mobility procedure in case that the mobility procedure is triggered.

10. The control method according to claim 9, wherein the purpose information comprises at least one of:
first purpose information, wherein the first purpose information indicates the terminal device to change among a plurality of candidate cells based on an indication from the network device;
second purpose information, wherein the second purpose information indicates the terminal device to change a serving cell configuration to the candidate cell configuration in case that a trigger condition configured by the network device or agreed upon in a protocol is met; or
third purpose information, wherein the third purpose information indicates the terminal device to change the serving cell configuration to the candidate cell configuration.

11. The control method according to claim 9 or claim 10, further comprising:
transmitting a control signaling to the terminal device, wherein the control signaling indicates the terminal device to process the transmission entity corresponding to the mobility procedure, and the control signaling comprises at least one of:
an L1 control signaling;
an L2 control signaling; or
a radio resource control (RRC) control signaling.

12. The control method according to claim 11, wherein the control signaling comprises indication information, wherein the indication information comprises at least one of:
a configuration identifier, wherein the configuration identifier is used to indicate a configuration corresponding to a cell group or a cell;
L2 entity information, wherein the L2 entity information comprises an L2 entity type, and the L2 entity type comprises at least one of: service data adaptation protocol (SDAP), packet data convergence protocol (PDCP), radio link control (RLC), or medium access control (MAC); or
a processing manner, wherein the processing manner comprises any one of: reestablishment, reset or partial reset, or remaining unchanged.

13. A communication device, comprising:
a processing module, configured to: in response to a terminal device triggering a mobility procedure, determine purpose information of a mobility procedure;
wherein the processing module is further configured to perform a processing on a transmission entity corresponding to the mobility procedure based on the purpose information of the mobility procedure.

14. A communication device, comprising:
a reception and transmission module, configured to transmit candidate cell configuration information to a terminal device, wherein the candidate cell configuration information comprises purpose information of a candidate cell configuration, and the purpose information indicates the terminal device to process a transmission entity corresponding to a mobility procedure in case that the mobility procedure is triggered.

15. A communication device, comprising a processor and a memory, wherein the memory is configured to store a computer program, and the processor is configured to execute the computer program stored in the memory to cause the communication device to perform the control method according to any one of claims 1 to 8.

16. A communication device, comprising a processor and a memory, wherein the memory is configured to store a computer program, and the processor is configured to execute the computer program stored in the memory to cause the communication device to perform the control method according to any one of claims 9 to 12.

17. A computer readable storage medium, configured to store instructions, wherein when the instructions are executed by a processor, the control method according to any one of claims 1 to 8 is performed.

18. A computer readable storage medium, configured to store instructions, wherein when the instructions are executed by a processor, the control method according to any one of claims 9 to 12 is performed.
